Europäisches Patentamt

European Patent Office

Office européen des brevets

(11) Veröffentlichungsnummer: **0 257 105**
**A1**

## EUROPÄISCHE PATENTANMELDUNG

(21) Anmeldenummer: **86109934.9**

(22) Anmeldetag: **19.07.86**

(51) Int. Cl.4: **A01G 3/08** , B27B 19/09

(43) Veröffentlichungstag der Anmeldung:
**02.03.88 Patentblatt 88/09**

(84) Benannte Vertragsstaaten:
**AT BE CH DE FR GB IT LI LU NL SE**

(71) Anmelder: **Steiner, Walter**
**Säntisstrasse 52**
**CH-8311 Brütten(CH)**

(72) Erfinder: **Steiner, Walter**
**Säntisstrasse 52**
**CH-8311 Brütten(CH)**

(74) Vertreter: **Rottmann, Maximilian R.**
**c/o Rottmann + Quehl AG Glattalstrasse 37**
**CH-8052 Zürich(CH)**

(54) **Astsäge.**

(57) Die Astsäge (1) hat ein im spitzen Winkel zu ihrem Sägeblatt (9) angeordnetes Führungsglied (22), so dass ein zu zersägender Ast (23) in einer maulartigen Arbeitsöffnung (24) aufgenommen wird und die Astsäge (1) in Längsrichtung ihrer langgestreckten Antriebsübertragung (6) gegen den zu zersägenden Ast (23) drückbar ist. Das Führungsglied (22) ist mit einer asymmetrischen, entgegengesetzt zur asymmetrischen Verzahnung des Sägeblattes gerichteten Verzahnung versehen, um einen zu durchtrennenden Ast festzuhalten, und ein Verklemmen desselben zu verhindern.

FIG. 2

# ASTSÄGE

Die vorliegende Erfindung betrifft eine Astsäge mit einem Gehäuse, das einen Antrieb zur Erzeugung einer hin-und hergehenden Bewegung aufnimmt, einem mit dem Antrieb verbundenen Sägeblatt und einem im Bereich des Sägeblattes angeordneten Führungsglied für den zu durchtrennenden Ast.

Bekannte Astsägen haben den Nachteil, dass das Sägeblatt beim Sägen in Richtung quer zu seiner Arbeitsbewegung gegen den abzusägenden Ast gedrückt werden muss. Besonders wenn zwischen dem von Hand gehaltenen Antriebsmotor und dem Sägeblatt eine den Abstand zwischen einem hochgelegenen Baumast und der bedienenden Person überbrückende, langgestreckte Antriebsübertragung vorhanden ist, führt dieser quergerichtete Arbeitsdruck bald zur Ermüdung. Ausserdem lässt in einem solchen Fall der entsprechend lange Hebelarm nur einen begrenzten Arbeitsdruck zu. Im Moment der Durchtrennung des Astes besteht weiterhin die Gefahr, dass der plötzlich aufgehobene Gegendruck zu einer unkontrollierten und gefährlichen Schwenkbewegung der Astsäge führt.

Eine Säge zum Abtrennen von Ästen von Bäumen der gattungsgemässen Art ist aus dem DE-GM 81 32 511.8 bekannt. Bei dieser Säge sind jedoch nur vergleichsweise kurze, senkrecht zur Be wegungsrichtung des Sägeblattes abstehende, hakenförmig ausgebildete Stummel (Anschlagleisten zum Anlegen an die abzutrennenden Äste) als Führungsglieder vorhanden, die im übrigen lediglich die Aufgabe haben, das Ergreifen und Herunterziehen abgetrennter Äste zu erleichtern. Mit dieser Konstruktion können die eingangs genannten Probleme nicht gelöst werden.

Ein weiterer Nachteil bei deiser Säge ist die verhältnismässig breite Ausladung dieser beidseitig abstehenden Anschlagleisten, die ein Heranführen des Sägeblattes bei dicht beasteten Bäumen an den zu durchtrennenden Ast erschweren.

Dieser Nachteile von bekannten Astsägen zu vermeiden und folglich eine Astsäge zu finden, die leichter zu handhaben sowie universeller einzusetzen ist und deren Betrieb mit verringertem Unfallrisiko verbunden ist, ist das Ziel der Europäischen Patentanmeldung Nr. 86107854.1.

Ausgehend von der Überlegung, dass eine Schubkraft in Richtung zum Ast hin oder eine Zugkraft in Richtung vom Ast weg von der Bedienungsperson müheloser, dosierter und mit geringerem Unfallrisiko aufzubringen ist, wird in jener Patentanmeldung vorgeschlagen, dass mindestens ein Teilabschnitt des Führungsgliedes im spitzen Winkel zum Sägeblatt verläuft bzw. in eine solche Stellung verschwenkbar ist, so dass das Führungsglied bzw. dessen Teilabschnitt und das Sägeblatt gemeinsam eine maulartige Arbeitsöffnung bilden.

Damit ist zwar erreicht, dass je nach Anordnung des Führungsgliedes die Astsäge zum Ast hin gestossen oder vom Ast weggezogen werden kann, wobei Sägeblatt und Führungsglied zusammen eine Zwangsführung bilden, die den Ast aufnimmt und unter Wirkung des Sägeblattes durch trennt; es kann aber vorkommen, dass in gewissen Fällen eine Verhakung des Sägeblattes an der Astoberfläche eintritt, wobei dann insbesondere ein dünnerer Ast nurmehr hin-und herbewegt, aber nicht mehr durch das Sägeblatt durchtrennt wird, da die Relativbewegung zwischen Sägeblatt und Ast fehlt.

Es ist die Aufgabe der vorliegenden Erfindung, eine Astsäge der gattungsgemässen Art soweit zu verbessern, dass bei leichter Handhabung, universeller Einsatzmöglichkeit und geringem Unfallrisiko ein verbessertes Schneidverhalten, insbesondere auch bei dünnen und damit biegsamen oder feuchten Ästen erreicht ist. Gemäss der Erfindung wird diese Aufgabe durch eine Astsäge mit den im Patentanspruch 1 angegebenen Merkmalen gelöst.

Eine für höher gelegene Äste geeignete Ausführung der erfindungsgemässen Astsäge zeichnet sich dadurch aus, dass das Führungsglied und das Sägeblatt am Ende einer langgestreckten Antriebsübertragung aufgenommen sind, welche einen mit dem Gehäuse verbundenen Tragteil und eine darin hin-und her beweglich gelegerte Antriebsstange für den Antrieb des Sägeblattes aufweist.

Ein noch weiter verbessertes Schnittverhalten und eine noch weiter verringerte Unfallgefahr lässt sich durch die Massnahme erreichen, dass die Antreibsübertragung in Richtung ihrer Längsachse entgegen der Wirkung einer Feder teleskopartig zusammenschiebbar ist.

Weitere Merkmale, besondere Ausgestaltungen und bevorzugte Ausführungsformen der erfindungsgemässen Astsäge sind in den abhängigen Ansprüchen 2 bis 13 enthalten.

Im folgenden wird der Erfindungsgegenstand anhand von in der Zeichnung dargestellten Ausführungsbeispielen näher erläutert. Es zeigen:

Fig. 1 eine vereinfachte Gesamtansicht der erfindungsgemässen Astsäge,

Fig. 2 eine vereinfachte Gesamtansicht einer erweiterten Ausführungsform,

Fig. 3 einen Längsschnitt durch einen Teil der Astsäge im Bereich ihres Sägeblattes,

Fig. 4 einen Längsschnitt durch einen Teil einer zweiten Ausführungsform einer erfindungsgemässen Astsäge,

Fig. 5+6 schematische Ansichten von Vorderteilen von weiteren, abgewandelten Ausführungsformen der erfindungsgemässen Astsäge, und

Fig. 7 schematische Ansichten von bevorzugten Verzahnungsformen.

Die in den Zeichnungen nur schematisch dargestellte Astsäge 1 hat einen elektromotorischen Antrieb, dessen Motor und mechanische Antriebsübertragung zur Erzeugung einer hin-und hergehenden Bewegung in einem gemeinsamen Antriebsgehäuse 2 zusammengefasst sind, an deren hinterem Ende ein Handgriff 3 angeformt ist. Ein im Handgriff vorgesehener Schalter 4 dient zur An-und Abschaltung des Elektromotors. Ein derartiger Antrieb ist in zahlreichen Ausführungsformen bekannt und ist z.B. an Stichsägen zu finden.

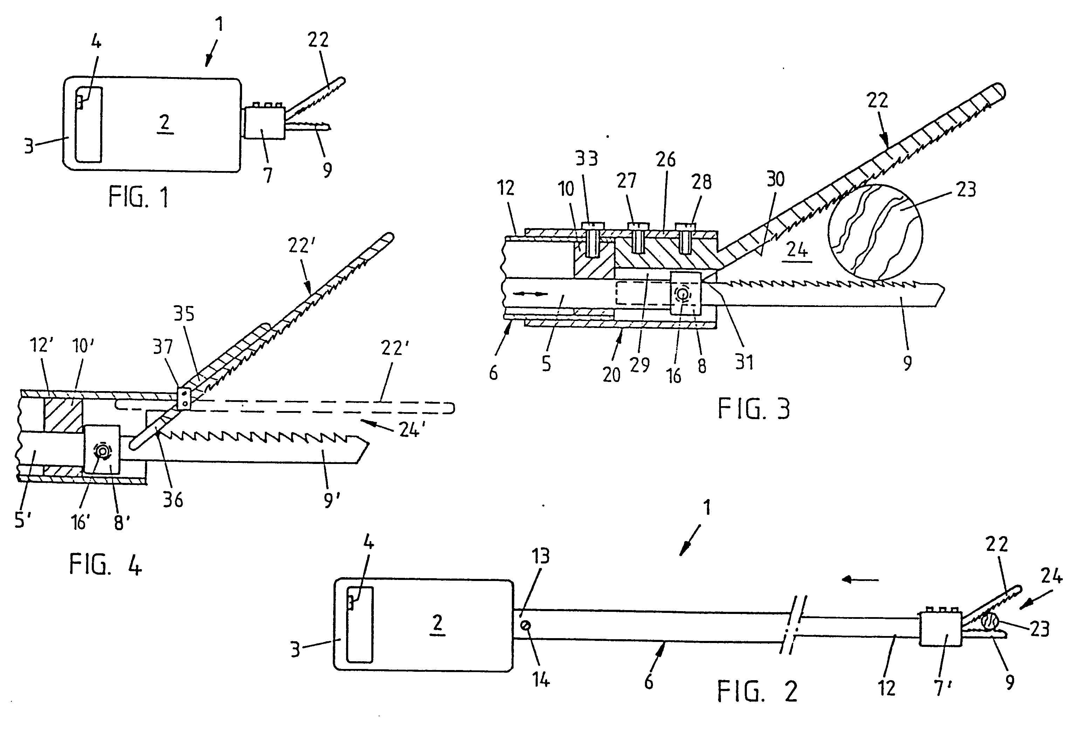

Bei der Ausführung gemäss Fig. 1 ist am nicht dargestellten Antriebszapfen der Antriebseinheit 2 an Stelle eines Stichsägeblattes eine Kupplungsmuffe 7 befestigt, die einerseits das Sägeblatt 9 aufnimmt und dieses mit dem Antriebszapfen verbindet, und andererseits mit einem Führungsglied 22 versehen ist, das langgestreckte Gestalt besitzt und sich in spitzem Winkel von der Wurzel des Sägeblattes 9 weg gegen vorne erstreckt.

Beim in den Fig. 2 und 3 dargestellten Ausführungsbeispiel ist an der Antriebseinheit 2 die Stange 5 einer langgestreckten Antriebsübertragung 6, z.B. mittels einer seitlichen Andruck schraube 14, befestigt, die sich seitlich an einem Kupplungsfutter befindet, das gleichartig ausgeführt ist wie das Kupplungsfutter 8 (Fig. 3) für die Befestigung des Sägeblattes 9 am entgegengesetzten Ende dieser Stange 5.

Die Stange 5 der Antriebsübertragung 6 ist in mindestens einem Führungskörper 10 axialbeweglich gelagert, der in einem starr mit dem Gehäuse der Antriebseinheit 2 verbundenen Rohr 12 gehalten ist. Die starre Verbindung des Rohres 12 mit dem Gehäuse der Antriebseinheit 2 kann auf verschiedene an sich bekannte Arten erfolgen. Beispielsweise wird das Ende 13 des Rohres 12 auf einen am Ende der Antriebseinheit 2 befestigten, zylindermantelförmigen Bund aufgeschoben und an diesem bajonettartig verriegelt oder mittels einer Andruckschraube 14 gesichert.

Gemäss Fig. 3 ist eine Hülse 20 vorgesehen, die vor allem dazu dient, ein im spitzen Winkel zum Sägeblatt 9 angeordnetes Führungsglied 22 am dem Antrieb 2 abgekehrten Ende des Rohres 12 zu befestigen. Durch dieses Führungsglied 22, das vorzugsweise länger ist als die Arbeitslänge des Sägeblattes 9, lässt sich der zu sägende Ast 23 leicht erfassen und gegen das Sägeblatt 9 drücken, indem die Astsäge in ihrer Längsrichtung in etwa radial gegen den Ast 23 gedrückt wird. Mit dem Fortschreiten der Sägearbeit dringt dabei der Ast 23 zunehmend in die maulartige Arbeitsöffnung 24 ein, die spitzwinklig zwischen dem Führungsglied 22 und dem Sägeblatt 9 gebildet ist, bis der Ast 23 durchsägt ist.

Das Führungsglied 22 hat beispielsweise entsprechend der Darstellung in Fig. 3 ein abgewinkeltes inneres Ende 26, das mittels zweier Schrauben 27, 28 an der Innenseite der Hülse 20 befestigt ist. Eine zur Bewegungsrichtung der Stange 5 parallele Nut 29 im abgewinkelten Ende 26 des Führungsgliedes 22 ermöglicht eine unbehinderte Bewegung des Kupplungsfutters 8, obwohl sich die innere Führungsfläche 30 des Führungsgliedes 22 und das Sägeblatt 9 in einem Scheitelbereich 31 treffen.

Zum Auswechseln des Sägeblatts 9 wird die Hülse 20 und somit auch das Führungsglied 22 vom Rohr 12 gelöst, so dass die Andruckschraube 16 des Kupplungsfutters 8 gelöst werden kann. Das Kupplungsfutter 8 kann hierfür durch eine bajonettartige Verriegelung oder eine lösbare Schraube 33 mit dem Rohr 12 verbunden sein.

Das Führungsglied 22' kann jedoch gemäss Fig. 4 auch unmittelbar am Rohr 12' befestigt sein, falls an dessen Ende seitlich eine Öffnung vorgesehen ist, durch die hindurch die Andruckschraube 16' des Kupplungsfutters 8' für ein Werkzeug zugänglich ist. Fig. 4 zeigt ein Beispiel einer derartigen Ausführungsform. Das Rohr 12', das die Verbindung mit der Antriebseinheit 2 herstellt, ist an seinem Ende seitlich ausgeschnitten und der verbliebene, zungenförmige Teil 35 ist nach oben unter dem Winkel abgebogen, den das Führungsglied 22' mit dem Sägeblatt 9' einschliessen soll. Dieses Führungsglied 22' ist an der Innenseite dieses zungenförmigen Teils 35 durch ein federn des Verankerungsteil 37 schwenkbar befestigt. Das zungenförmige Teil 35 hat die Form eines langgestreckten Steges und weist an seinem inneren Ende eine Aussparung 36 auf, durch die hindurch sich das Kupplungsfutter 8' bewegt. Ausserdem wirkt das zungenförmige Teil 35 als Anschlag für das Führungsglied 22'.

Das federnde Teil 37 hat das Bestreben, das Führungsglied 22' in die gestrichelt gezeichnete Lage in Fig.4, d.h. parallel zum Sägeblatt 9', zu verschwenken. Somit ist ein Einfahren des Vorderteils der Astsäge zwischen anderen Zweigen hindurch wesentlich erleichtert, da das Führungsglied 22' im Ruhezustand eingeschwenkt ist und somit in radialer Richtung praktisch keinen Platz beansprucht. Dadurch, dass das Führungsglied 22' länger ist als das Sägeblatt 9', kann der vorderste Abschnitt des Führungsgliedes 22' an den abzusägenden Ast angelegt werden, um das

Führungsglied 22' in die in Fig.4 ausgezogen gezeichnete Wirklage zu bringen; der Ast wird dadurch in der maulartigen Arbeitsöffnung 24' aufgenommen und durch Ausübung eines Druckes in der Längsrichtung der Antriebsübertragung 6 gehalten und durchgesägt.

Das Führungsglied 22 bzw. 22' kann in Anpassung an den Anwendungsbereich der Astsäge, d.h. in Anpassung an den zu erwartenden Durchmesser der abzusägenden Äste 23, unter verschiedenen Winkeln relativ zum Sägeblatt 9 bzw. 9' angestellt und hierfür gegebenenfalls auch winkelverstellbar mit dem Rohr 12 bzw. 12' verbunden sein. Statt geradlinig kann das Führungsglied 22 bzw. 22' auch gekrümmt ausgeführt sein, so dass ein sich stetig ändernder Winkel gegenüber dem Sägeblatt 9 bzw. 9' vorhanden ist.

Wie in den Fig. 1 bis 4 schematisch dargestellt, ist das Führungsglied 22 bzw. 22' an seiner Kante, die dem Sägeblatt 9 bzw. 9' gegenüberliegt, mit einer Verzahnung versehen. Diese kann, wie auch die Verzahnung des Sägeblattes 9 bzw. 9', asymmetrisch ausgeführt; hierauf wird im folgenden noch eingegangen werden.

In den dargestellten Beispielen verwendet die erfindungsgemässe Astsäge ein Sägeblatt 9 bzw. 9', wie es für Stichsägen üblich ist. Das Sägeblatt kann jedoch auch für die Astsäge speziell ausgeführt sein und entsprechend eine wesentlich grössere Länge aufweisen, mit einem entsprechend angepassten System der Befestigung mit der Stange 5 bzw. 5'.

Weiterhin kann das Rohr 12, das den oder die Führungskörper 10 für die die Antriebsbewegung übertragende Stange 5 trägt, in Richtung seiner Längsachse, entgegen der Wirkung einer Feder, teleskopartig um einen bestimmten, begrenzten Weg zusammenschiebbar sein, wie es in Fig. 2 - schematisch angedeutet ist. Dadurch werden Stösse, Schläge und dgl., wie sie beim Durchtrennen von Ästen vorkommen können, wirkungsvoll abgefangen, wodurch sich die Unfallgefahr verringert und die Gleichmässigkeit des Schnittes gesteigert wird.

Eine Weiterbildung der erfindungsgemäss ausgebildeten Astsäge kann ferner darin erblickt werden, dass die Rohr-oder Stabförmige Antriebsübertragung 6 mehrteilig ausgebildet ist, indem sie aus mehreren, miteinander verbindbaren Teilstücken besteht. Die Verbindung zwischen den einzelnen Teilstücken kann dabei durch an sich bekannte Kupplungsmittel erfolgen, so dass die Möglichkeit gegeben ist, die Astsäge an den vorgesehenen Verwendungsbereich anzupassen, indem, je nach Höhenlage der abzusägenden Äste, die Länge der Antriebsübertragung durch Einfügung zusätzlicher oder durch Entfernung von vorhandenen Antriebsübertragungs-Teilstücken angepasst wird. Auch in diesem Fall kann eines der Teilstücke federnd teleskopartig zusammenschiebbar sein.

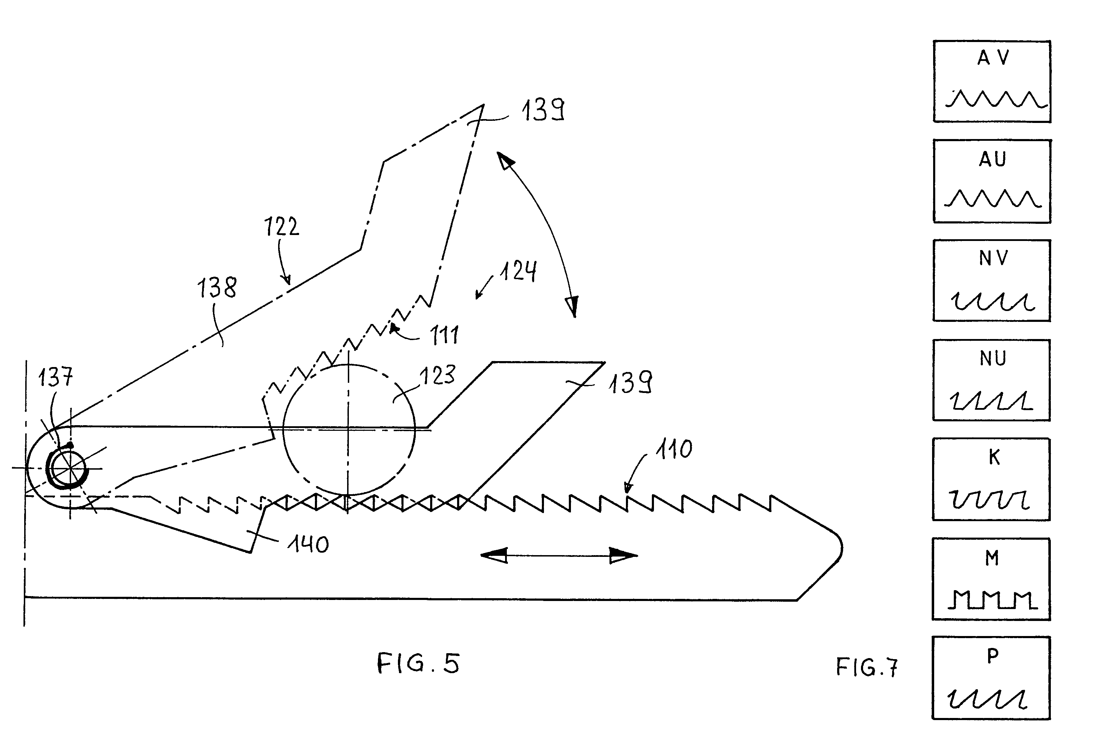

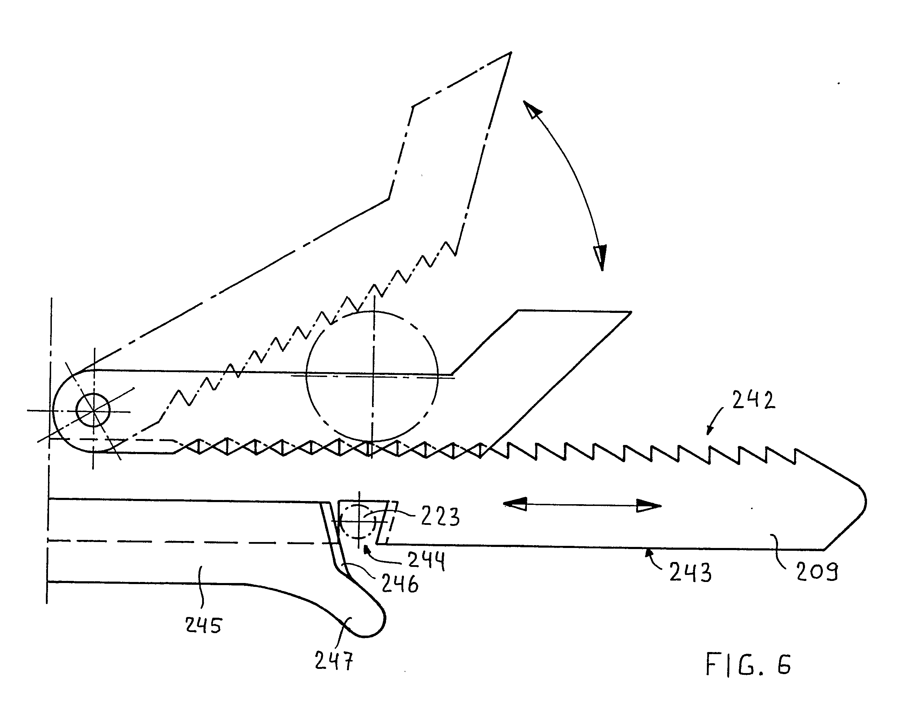

In den Fig. 5 und 6 sind schematisch verschiedene Weiterbildungen des Erfindungsgegenstandes dargestellt, und zwar jeweils in einer Seitenansicht des Endteiles der Astsäge, d.h. des Sägeblattes und des Führungsgliedes.

Die Ausführung gemäss Fig. 5 besitzt wiederum ein zu einer hin-und hergehenden Bewegung angetriebenes Sägeblatt 109, das in entsprechender Weise in einer nicht näher dargestellten Kupplungsmuffe aufgenommen ist. An dieser ist ein in diesem Beispiel schwenkbares Führungsglied 122 gelagert, welches einen ersten Abschnitt 138 aufweist, dessen eines Ende im Bereich der Sägeblattwurzel schwenkbar aufgenommen ist und der sich, in entlastetem Ruhezustand, parallel neben dem Sägeblatt 109 ver laufend erstreckt. An diesen ersten Abschnitt 138 schliesst sich ein zweiter Abschnitt 139 an, der mit dem ersten Abschnitt 138 einen stumpfen und damit mit dem Sägeblatt 109 einen spitzen Winkel einschliesst. Dadurch ist eine maulartige Arbeitsöffnung 124 gebildet, in welche der abzusägende Ast 123 einzuführen ist. Das Führungsglied 122, das als flaches Metall-oder Kunststoffteil ausgebildet sein kann, liegt dabei etwas neben dem Sägeblatt 109, um dessen Bewegung nicht zu behindern.

Nur schematisch angedeutete Federmittel 137 haben das Bestreben, das Führungsglied 122 von der in Fig. 5 gestrichelt gezeichneten, ausgeschwenkten Stellung in die ausgezogen gezeichnete, eingeschwenkte Stellung zu verdrehen. Es versteht sich, dass ein (nicht dargestellter) Anschlag den Verschwenkungswinkel des Führungsgliedes 122 begrenzt. Im weiteren ist das Führungsglied 122 mit einem Anschlag 140 versehen, gemäss Darstellung in Figur 5 mit einem einstückig am Führungsglied 122 angeformten, vorstehenden Bereich, der in der Gegend der Sägeblattwurzel in die maulartige Öffnung 124 zwischen Sägeblatt 109 und Führungsglied 122 hineinragt. Dadurch ist wirksam verhindert, dass sich der zu durchtrennende Ast 123 verklemmen kann, weil er mit seiner hinteren Peripherie am Anschlag 140 anliegen und damit daran gehindert wird, allzuweit in die maulartige Öffnung 124 einzudringen.

Das Sägeblatt 109 ist mit einer asymmetrischen, nach einer Richtung geneigten Verzahnung 110 versehen, z.B. mit einer NV-, einer NU, einer K-oder einer P-Verzahnung gemäss Fig. 7. Dies hat zur Folge, dass die eigentliche Sägearbeit nur während eines Arbeitshubes des Sägeblattes in einer Richtung, dafür aber sehr effizient erfolgt. Während des Rückstellhubes des Sägeblattes 109 besteht prinzipiell die Gefahr, dass der abzutrennende Ast 123 aus der maulartigen Arbeitsöffnung 124 herausgeschoben wird; um dies zu verhindern, ist der Abschnitt 138 des Führungsgliedes 122 mit einer Verzahnung 111 versehen, die an sich beliebig ausgebildet sein kann, vorzugsweise aber ebenfalls asymmetrisch, der Verzahnung 110 des Sägeblattes 109 jedoch entgegengesetzt gerichtet ist.

Durch die Wirkung des Federorgans 137, welches das Führungsglied 122 und damit den Ast 123 gegen das Sägeblatt 109 drückt, wird somit der Ast 123 zuverlässig in der maulartigen Arbeitsöffnung 124 gehalten, da die Verzahnungen 110 und 111 gegensinnig auf den Astumfang einwirken. Dadurch ist sowohl ein Herausgleiten des Astes 123 aus der Arbeitsöffnung 124 heraus wie auch ein Verklemmen in dieser wirksam verhindert. Der Anschlag 140 unterstützt dabei den abzusägenden Ast 123 und trägt zusätzlich dazu bei, dass sich dieser nicht verklemmen kann.

Die Fig. 6 schliesslich zeigt eine weitere Variante, bei der das Sägeblatt 209 doppelseitig wirksam ist; die Ausbildung ist ähnlich wie im Zusammenhang mit Fig. 5 beschrieben. Die eine Arbeitskante 242 ist sägeblattartig gezahnt, wiederum mit einer asymmetrisch einseitig ausgerichteten NV-, NU-, K-oder P-Ver zahnung, während die andere Arbeitskante 243 als Messerschneide ausgebildet und mit einer zugeschliffenen Ausklinkung 244 versehen ist, um dünne Äste 223 abzuscheren. Zweckmässigerweise ist in diesem Fall parallel, in geringem Abstand, neben dem Sägeblatt 209 ein stationäres Gegenmesser 245 angeordnet, dessen Vorderkante 246 sich in etwa bis zur Ausklinkung 244 erstreckt, sodass die zugeschliffene Kante der Ausklinkung 244 und die Vorderkante 246 in der Art einer Schere zusammenwirken, um sehr dünne und damit biegsame Äste abschneiden zu können. Ein Fortsatz 247 am freien Ende des Gegenmessers 245 erleichtert das Einführen eines abzutrennenden Astes 223 in die Ausklinkung 244.

Es versteht sich, dass hier nur einige wenige Ausführungsformen beschrieben sind. Vielfältige Kombinationen liegen im Rahmen der Erfindung und sind dem Fachmann ohne weiteres erkenntlich.

**Ansprüche**

1. Astsäge (1) mit einen Gehäuse (2), das einen Antrieb zur Erzeugung einer hin-und hergehenden Bewegung aufnimmt, einem mit dem Antrieb verbundenen Sägeblatt (9, 9', 109, 209) und einem im Bereich des Sägeblattes angeordneten Führungsglied (22, 22', 122,) für den zu durchtrennenden Ast (23, 123, 223), dadurch gekennzeichnet, dass das Führungsglied (22, 22', 122) im spitzen Winkel zum Sägeblatt (9, 9', 109, 209) verläuft

bzw. in eine solche Stellung verschwenkbar ist, und dass das Sägeblatt mit einer asymmetrischen, einseitig gerichteten Verzahnung (110, 210) versehen ist, wobei mindestens ein Teilabschnitt (138) des Führungsgliedes eine der Verzahnung des Sägeblattes gegenüberliegende Verzahnung (111) besitzt.

2. Astsäge nach Anspruch 1, dadurch gekennzeichnet, dass die Verzahnung (111) am Führungsglied (22, 22, 122) asymmetrisch ausgebildet und gegenüber der Verzahnung (110, 210) des Sägeblattes (9, 9', 109, 209) entgegengesetzt gerichtet ist.

3. Astsäge nach Anspruch 1 oder 2, dadurch gekennzeichnet, dass das Sägeblatt (9, 9', 109, 209) mit einer NV-, NU-, K-oder P-Verzahnung versehen ist.

4. Astsäge nach einem der Ansprüche 1 bis 3, dadurch gekenn zeichnet, dass das Führungsglied (22, 22', 122) und das Sägeblatt (9, 9', 109, 209) am Ende einer langgestreckten Antriebsübertragung (6) aufgenommen sind, welche einen mit dem Gehäuse (2) verbundenen Tragteil (12, 12') und eine darin hin-und herbeweglich gelagerte Antriebsstange (5, 5') für den Antrieb des Sägeblattes aufweist.

5. Astsäge nach einem der Ansprüche 1 bis 4, dadurch gekennzeichnet, dass die Antriebsübertragung (6) in Richtung ihrer Längsachse entgegen der Wirkung einer Feder teleskopartig zusammenschiebbar ist.

6. Astsäge nach einem der vorangehenden Ansprüche, dadurch gekennzeichnet, dass die Antriebsübertragung (6) bzw. das Tragteil mehrteilig und zerlegbar ausgebildet ist bzw. sind, wobei zwischen den einzelnen Teilen Kupplungsmittel vorgesehen sind.

7. Astsäge nach einem der vorangehenden Ansprüche, dadurch gekennzeichnet, dass das Führungsglied (22', 122) schwekbar gelagert ist und unter Wirkung eines Federorgans (37, 137) steht, welches das Führungsglied von einer Lage, in der es mit dem Sägeblatt (9', 109, 209) einen spitzen Winkel einschliesst, in eine zum Sägeblatt parallele Lage zu verschwenken bestrebt ist.

8. Astsäge nach einem der vorhergehenden Ansprüche, dadurch gekennzeichnet, dass das Sägeblatt (209) doppelseitig ist, indem beide seiner Längskanten als Bearbeitungskanten ausgebildet sind.

9. Astsäge nach Anspruch 8, dadurch gekennzeichnet, dass eine der Bearbeitungskanten als Sägekante (110) und die andere Bearbeitungskante als Messerschneide (234) ausgebildet ist.

10. Astsäge nach Anspruch 8, dadurch gekennzeichnet, dass die beiden Bearbeitungskanten als Sägekanten mit unterschiedlich feiner Zahnung ausgebildet sind.

11. Astsäge nach Anspruch 9, dadurch gekennzeichnet, dass die Messerschneide mit einer zugeschliffenen Ausklinkung (244) versehen ist.

12. Astsäge nach Anspruch 11, dadurch gekennzeichnet, dass neben dem Sägeblatt (209) ein stationäres Gegenmesser (245) vorgesehen ist, dessen Vorderkante (246) mit der Ausklinkung in der Art einer Schere zusammenwirkt.

13. Astsäge nach einem der vorhergehenden Ansprüche, dadurch gekennzeichnet, dass das Führungsglied (122) mit einem im Bereich der Sägeblattwurzel angeordneten Anschlag (140) versehen ist.

FIG. 1

FIG. 2

FIG. 3

FIG. 4

139

122

138

137

111

124

123

139

110

140

FIG.5

FIG.7

| A V |
| :---: |
| AU |
| N V |
| NU |
| K |
| M |
| P |

0 257 105

FIG. 6

242

223
244
246
245
247
243
209

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | BE-A- 884 632 (J. DURIEUX) * Seite 2, Zeilen 3-16; Figuren 1,2 * | 1,4 | A 01 G 3/08 B 27 B 19/09 |
| | --- | | |
| X | US-A-3 181 239 (A. SKOK) * Insgesamt * | 1,2,7 | |
| | --- | | |
| X | DE-A-3 504 257 (H. KRIEGER) * Seite 7, Absatz 3; Seite 7, letzter Absatz - Seite 8, erster Absatz; Figuren 1E,17-21 * | 1,7-9 | |
| | --- | | |
| A | DE-A-3 418 768 (H. KEMPENDORF) * Ansprüche 1-3; Seite 9, Absatz 2 - Seite 10, Absatz 3; Figur 2 * | 8,9,11 ,12 | |
| | --- | | RECHERCHIERTE SACHGEBIETE (Int. Cl.4) |
| A | DE-U-8 514 381 (MASCHINENFABRIK RAU GmbH) * Ansprüche 3-6 * | 8,10 | A 01 G B 27 B B 23 D |
| | --- | | |
| A | US-A-3 715 805 (D.M. FRASER) * Spalte 3, Zeile 21 - Spalte 4, Zeile 73; Figuren 1-5 * | 1,5,6 | |
| | --- | | |
| A | CH-A- 486 193 (H.K. STERZIK) * Insgesamt * | 1,2 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 19-03-1987 | HERYGERS J.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument